(19) **Europäisches Patentamt / European Patent Office / Office européen des brevets**

(11) **EP 4 625 003 A1**

(12) **EUROPEAN PATENT APPLICATION**
published in accordance with Art. 153(4) EPC

(43) Date of publication:
01.10.2025 Bulletin 2025/40

(21) Application number: 23926406.2

(22) Date of filing: 02.11.2023

(51) International Patent Classification (IPC):
*G01W 1/14* (2006.01)

(52) Cooperative Patent Classification (CPC):
G01W 1/14

(86) International application number:
PCT/JP2023/039623

(87) International publication number:
WO 2024/185198 (12.09.2024 Gazette 2024/37)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 03.03.2023 JP 2023032560

(71) Applicants:
• **Japan Aviation Electronics Industry, Limited**
**Tokyo 150-0043 (JP)**
• **Suwa University of Science**
**Chino-shi, Nagano 391-0292 (JP)**

(72) Inventors:
• **ICHIKAWA, Shintaro**
**Tokyo 150-0043 (JP)**
• **YAMANE, Kohei**
**Tokyo 150-0043 (JP)**
• **SASAKI, Kyosuke**
**Chino-shi, Nagano 391-0292 (JP)**
• **KOBAYASHI, Seiji**
**Chino-shi, Nagano 391-0292 (JP)**
• **WATANABE, Takeshi**
**Chino-shi, Nagano 391-0292 (JP)**
• **SATO, Kazuhiro**
**Chino-shi, Nagano 391-0292 (JP)**

(74) Representative: **MERH-IP Matias Erny Reichl Hoffmann**
**Patentanwälte PartG mbB**
**Paul-Heyse-Straße 29**
**80336 München (DE)**

(54) **PRECIPITATION METER**

(57) A precipitation gauge 100 includes a receiver 14 to receive water as a substance falling from the sky, a water collection container 15 storing water with the water reaching a predetermined water level, a drainage pipe 16 connected to a drainage outlet 15a of the water collection container 15, a drainage device 17 attached to the drainage outlet 15a or the drainage pipe 16 to discharge a predetermined amount of water in the water collection container 15 in one operation, a water level gauge 18 to measure a water level in the water collection container 15, a detector 21 to detect rise in the water level in the water collection container 15, a controller 22 to make the drainage device 17 discharge water from the water collection container 15 to lower the water level in the water collection container 15 to the predetermined water level in response to detection of rise in the water level in the water collection container 15, and a calculator 23 to calculate a depth of precipitation and/or precipitation intensity using the number of times of discharge by the drainage device 17.

EP 4 625 003 A1

FIG. 1

**Description**

[TECHNICAL FIELD]

The present disclosure relates to a precipitation gauge.

[BACKGROUND ART]

A precipitation gauge is a device to measure a depth of precipitation. The term "depth of precipitation" is defined as a depth to which water as a substance, fallen from the sky within a predetermined period, results in water in liquid phase covering a horizontal surface of the ground, in which the assumption is required that the water in liquid phase neither infiltrate into the ground, nor evaporate from the surface of the ground, nor be discharged from the surface of the ground. The "water as a substance" may be rephrased as a "compound expressed by a chemical formula $H_2O$". The present specification uses, on the basis of the International System of Units, SI units (including units with SI prefixes) and SI-derived units, as well as derived units using these. Other unit systems may be adopted. The unit system to be adopted will not affect the precipitation gauge disclosed in the present specification. The Japan Meteorological Agency adopts mm (millimetre) as a unit of the depth of precipitation, and the present specification also adopts mm as the unit of the depth of precipitation.

The "predetermined period" is freely designated. The "predetermined period" can be, for example, 10 minutes, 1 hour, 24 hours (specifically, 24 hours starting from any time point), or 1 day (that is, 24 hours from 00:00 to 24:00). In particular, the depth of precipitation D [mm] measured in one hour is sometimes referred to as "actually-measured precipitation intensity," and the unit of "actually-measured precipitation intensity" is mm/h (millimeter per hour). Furthermore, it is also possible to convert the depth of precipitation within a period other than one hour into the depth of precipitation per hour. The converted depth of precipitation is also referred to as "converted precipitation intensity," and the unit of "converted precipitation intensity" is also mm/h. For example, in a case where the depth of precipitation for 10 minutes is D [mm], the converted precipitation intensity is 6D [mm/h]. Hereafter, unless otherwise specified, "converted precipitation intensity" will simply be referred to as "precipitation intensity".

"Water as a substance that falls from the sky" can be broadly classified into water in liquid phase and water in solid phase. An atmospheric phenomenon where water in liquid phase falls from the sky is called rain, and the falling droplets of water are also referred to as rain. One example of an atmospheric phenomenon where water in solid phase falls from the sky is called snow, and in this case, the falling ice crystals are also referred to as snow. Furthermore, ice particles can be exemplified as the water in solid phase falling from the sky. The Japan Meteorological Agency refers to these ice particles as "hail" (the corresponding Japanese word pronounced: hyou) in a case where their diameter is equal to or greater than 5 mm, and as "sleet" (the corresponding Japanese word pronounced: arare) in a case where their diameter is less than 5 mm, and they are distinguished from each other. However, such criteria for distinction are not unified worldwide, and these two may not be distinguished from each other in some countries or regions. Unless otherwise specified, the terms "rain," "snow," etc. refer to falling objects from the sky, not atmospheric phenomena. In a case where water in solid phase (for example, snow or ice pellets) falls from the sky, or in a case where both water in liquid phase (that is, rain) and water in solid phase fall from the sky (the Japan Meteorological Agency refers to this atmospheric phenomenon as "mizore"), the precipitation gauge uses a heater attached to it to convert the water in solid phase into water in liquid phase, and then measures the depth of precipitation.

There is a relationship expressed in formula (1) among a volume V [$mm^3$] of water in liquid phase captured by the precipitation gauge, a catchment area A [$mm^2$], and the depth of precipitation D [mm]. The catchment area is an area of an opening to capture the water as a substance falling from the sky into the precipitation gauge.

[Formula 1]

$$D = \frac{V}{A} \tag{1}$$

The precipitation gauge can be broadly classified into a tipping bucket precipitation gauge and a storage precipitation gauge.

The tipping bucket precipitation gauge includes a tipping bucket in which two cups are separated by a central partition and adj acent to each other, and has a structure in which water in liquid phase drips alternately into the two cups. When one of the cups stores a certain amount $V_1$ of water in liquid phase, the tipping bucket tips over by the weight, resulting in the one cup discharging the water in liquid phase while the other cup begins to accept water in liquid phase. When the other bucket stores a certain amount $V_1$ of water in liquid phase, the tipping bucket tips over by the weight, resulting in the other bucket discharging the water in liquid phase while the one bucket begins to accept water in liquid phase. In this way, the tipping bucket keeps tipping repeatedly. The depth of precipitation D [mm] is measured by counting the number of times of tipping N within a predetermined period. In the precipitation gauges commonly used in Japan, $V_1$ corresponds to a volume equivalent to a depth of precipitation of 0.5 [mm]. Thus, D = 0.5 × N [mm] holds.

The storage precipitation gauge includes a reservoir to store water in liquid phase and measures the depth of precipitation by measuring a storage amount with a weight sensor, etc. (see Patent literature 1).

[PRIOR ART LITERATURE]

[PATENT LITERATURE]

Patent literature 1: Japanese Patent Application Laid-Open No. 2002-286864

[SUMMARY OF THE INVENTION]

[PROBLEMS TO BE SOLVED BY THE INVENTION]

The tipping bucket precipitation gauge utilizes mechanical movement of the tipping bucket (i.e., tipping), and thus, it is difficult to ensure long-term operational stability of the tipping bucket precipitation gauge. Furthermore, it is known that a measurement error of the tipping bucket precipitation gauges increases as the depth of precipitation is greater, and in particular, a tipping speed of the tipping bucket cannot follow precipitation intensity exceeding, for example, 100 [mm/h].

The storage precipitation gauge needs to discharge water from the reservoir when the reservoir is filled with water in liquid phase. Thus, the storage precipitation gauge cannot measure the depth of precipitation during discharging.

We disclose a precipitation gauge that can continuously measure a depth of precipitation and/or precipitation intensity even in atmospheric phenomena with precipitation intensity exceeding 100 [mm/h].

[MEANS TO SOLVE THE PROBLEMS]

Technical matters described in this section are provided to simply facilitate understanding of the gist of the present invention, instead of to explicitly or implicitly limit the invention recited in the claims or to allow persons other than those who receive benefit from the present invention (for example, the applicant and the right holder) to limit the invention recited in the claims. Outline of the present invention from other points of view can be understood, for example, from the claims of the present patent application as originally filed.

The disclosed precipitation gauge has (A) a configuration to attempt to maintain a predetermined amount of water storage through discharging processing, and (B) a configuration to discharge a certain amount of water in liquid phase for each time of discharging processing. Specifically, the disclosed precipitation gauge includes a water collection container to store water in liquid phase at a predetermined water level H in advance, and a drainage device to discharge a certain amount of water in liquid phase from the water collection container in one operation. The drainage device discharges the water in liquid phase from the water collection container to lower a water level in the water collection container to the predetermined water level H in response to inflow of the water in liquid phase to the water collection container. The depth of precipitation and/or precipitation intensity is calculated using the number of times of discharge from the drainage device.

[EFFECTS OF THE INVENTION]

According to the disclosed precipitation gauge, as will be described in detail later (please refer to the description of the embodiment), even in atmospheric phenomena with precipitation intensity exceeding 100 [mm/h], it is possible to continuously measure a depth of precipitation and/or precipitation intensity.

[BRIEF DESCRIPTION OF THE DRAWINGS]

FIG. 1 illustrates a configuration of a precipitation gauge according to an embodiment; and
FIG. 2 is a flowchart indicating operation of the precipitation gauge according to the embodiment.

[DETAILED DESCRIPTION OF THE EMBODIMENTS]

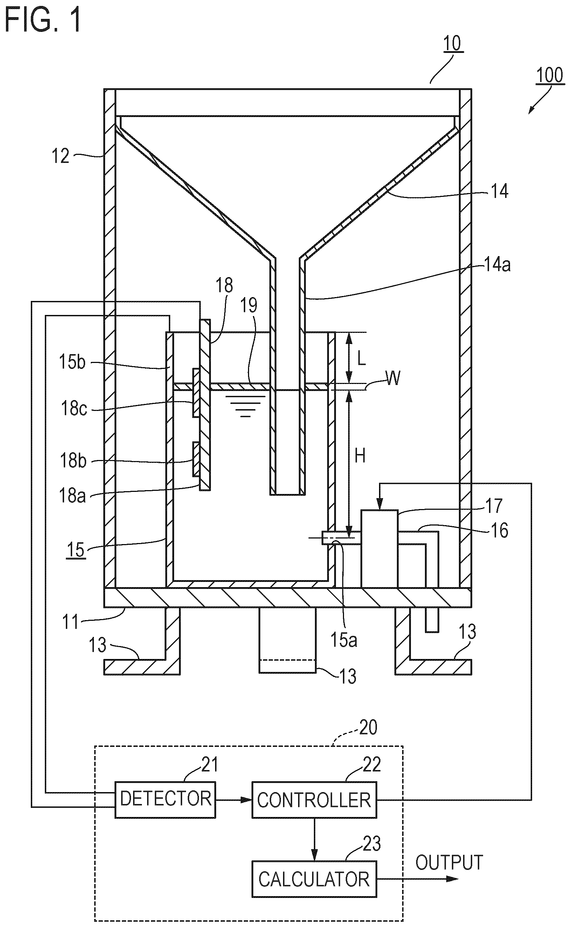

An embodiment will be described by referring to the drawings. A precipitation gauge 100 of the embodiment illustrated in FIG. 1 includes a main body 10 and a processing device 20. The precipitation gauge 100 includes a heater (not illustrated) as needed.

The main body 10 includes a base 11, a case 12, legs 13, a receiver 14, a water collection container 15, a drainage pipe 16, a drainage device 17, and a water level gauge 18. Two or more legs 13 for fixing the main body 10 to a concrete base (not illustrated) are attached to a lower surface of the base 11.

The cylindrical case 12 mounted on the base 11 houses inside the receiver 14, the water collection container 15, the drainage pipe 16, the drainage device 17, and the water level gauge 18. The funnel-shaped receiver 14 is fixed to an upper part of the case 12. The water collection container 15 is located below the receiver 14 and is fixed on the base 11. The water collection container 15 in this example has a rectangular cylindrical shape having a rectangular cross-section and is made of metal such as stainless steel. A net (not illustrated) is attached to an upper part of the receiver 14 to prevent intrusion of debris such as leaves, as needed. The water collection container 15 initially stores water in liquid phase at a predetermined water level. In FIG. 1, a symbol W indicates a surface of the water in liquid phase stored in the water collection container 15. The surface W of the water in liquid phase stored in the water collection container 15 is covered with non-volatile oil 19, thus preventing change in the water level due to evaporation.

The receiver 14 receives water as a substance falling from the sky. The water as a substance falling from the sky can be converted into water in liquid phase by a heater (not illustrated) heating the receiver 14 and the net (not illustrated), as needed. Hereafter, "water" refers to "water in liquid phase" unless otherwise specified. Water flows from the receiver 14 into the water collection container 15. The receiver 14 includes a long cylindrical water supply pipe 14a in a vertical direction (that is, an axial direction of the case 12) as illustrated in FIG. 1 in this example. Water flows into the water collection container 15 through the water supply pipe 14a. An outlet of the water supply pipe 14a (that is, a lower end) is located sufficiently below the water surface W, meaning it is located underwater. Thus, the water surface W is prevented from shaking due to inflow of water.

The water collection container 15 has a drainage outlet 15a at its lower part, and the drainage pipe 16 is connected to the drainage outlet 15a. The drainage device 17 that can alternately switch between water discharge operation and water stop operation (that is, alternately switch between an ON state and an OFF state) is attached to the drainage pipe 16. The drainage device 17 discharges a certain amount $\delta$ [mm$^3$] of water from the water collection container 15 in one water discharge operation (that is, in one ON state). The water discharge operation of the drainage device 17 is executed by a discharge command from a controller 22, which will be described later. An example of the drainage device 17 includes a metering pump such as a plunger pump and a tube pump, as well as a normally closed solenoid valve which will be described later. The principle with which the normally closed solenoid valve discharges a certain amount $\delta$ [mm$^3$] with one water discharge operation will be described later.

The drainage outlet 15a is located sufficiently below the water surface W, preferably near a bottom surface of the water collection container 15. However, in order to prevent debris that passes through the net (not illustrated) from adversely affecting the water discharge operation of the drainage device 17, it is desirable for the drainage outlet 15a to be located a certain distance above the bottom surface of the water collection container 15. This allows debris to accumulate at the bottom of the water collection container 15.

The water level gauge 18 is installed in the water collection container 15. A substrate 18a of the water level gauge 18 is fixed at a predetermined position by a fixture (not illustrated). The water level gauge 18 is a water level gauge to detect a water level by capacitance in this example, and as illustrated in FIG. 1, includes a reference electrode 18b and a water level electrode 18c arranged vertically on the substrate 18a. The reference electrode 18b and the water level electrode 18c face a plate side wall 15b of the rectangular cylindrical water collection container 15. The side wall 15b of the water collection container 15 functions as a ground electrode, and the reference electrode 18b and the side wall 15b constitute a parallel plate capacitor, while the water level electrode 18c and the side wall 15b also constitute a parallel plate capacitor.

As illustrated in FIG. 1, the reference electrode 18b is located underwater, and the water level electrode 18c crosses the water surface W in the vertical direction (that is, intersects the water surface W in the vertical direction). The water level gauge 18 has a configuration in which capacitance $C_s$ [F] measured by the reference electrode 18b is equal to capacitance $C_w$ [F] measured by the water level electrode 18c when the water collection container 15 stores water at the predetermined water level H. A dielectric constant of water is greater than that of air, and thus, in a case where the water level in the water collection container 15 is higher than the predetermined water level H, the capacitance $C_w$ [F] of the water level electrode 18c is greater than the capacitance $C_s$ [F] of the reference electrode 18b. The water surface W is covered with the non-volatile oil 19, and thus, the capacitance $C_w$ [F] of the water level electrode 18c is expressed as synthetic capacitance based on three dielectrics with different dielectric constants (namely, water, oil, and air). Adopting a configuration in which the capacitance $C_s$ [F] of the reference electrode 18b is compared with the capacitance $C_w$ [F] of the water level electrode 18c can result in reducing effects of change in capacitance due to change in a water temperature, and the like.

The processing device 20 includes a detector 21, a controller 22, and a calculator 23.

The detector 21 detects rise in the water level in the water collection container 15 by inflow of water on the basis of measurement by the water level gauge 18. Specifically, the detector 21 detects rise in the water level in the water collection container 15 in a case where the formula (2) holds among the capacitance $C_w$ [F] of the water level electrode 18c, the

capacitance $C_s$ [F] of the reference electrode 18b, and a threshold $\xi$ [F]. The threshold $\xi$ [F] is an incremental value of capacitance corresponding to rise in the water level in the water collection container 15 by inflow of water of the same amount $\delta$ [mm³] as an amount $\delta$ [mm³] of water discharged by the drainage device 17 in one water discharge operation. In other words, the rise in the water level $\Delta H$ [mm] detected by the detector 21 is expressed by formula (3). In formula (3), B [mm²] is a cross-sectional area of the water collection container 15. When the water collection container 15 stores the water at the predetermined water level H, a vertical length of a portion of the water level electrode 18c that is in contact with the air must be greater than $\Delta H$ [mm].

[Formula 2]

$$C_w \geq C_s + \xi \qquad (2)$$

$$\Delta H = \frac{\delta}{B} \qquad (3)$$

In a case where the detector 21 detects rise in the water level, the controller 22 outputs a discharge command to the drainage device 17 to lower the water level in the water collection container 15 to the predetermined water level H.

The calculator 23 calculates a depth of precipitation D [mm] and/or precipitation intensity $D_P$ [mm/h] using the number of discharge commands N output by the controller 22 within a predetermined period P [h]. As described above, an amount of water $\delta$ [mm³] to be discharged by the drainage device 17 in one water discharge operation is determined. Thus, the depth of precipitation D [mm] within the predetermined period P [h] can be calculated using formula (4), and the precipitation intensity $D_P$ [mm/h] can be calculated using formula (5). A [mm²] is a catchment area, specifically, an area of an opening of the receiver 14.

[Formula 3]

$$D = \frac{N \times \delta}{A} \qquad (4)$$

$$D_P = \frac{N \times \delta}{A \times P} \qquad (5)$$

In a case where water flows into the water collection container 15 exceeding water discharge capacity of the drainage device 17, the depth of precipitation and the precipitation intensity cannot be accurately measured. Thus, formula (6) must hold, where $D_{P,max}$ [mm/h] is a maximum value of the precipitation intensity that the precipitation gauge 100 can measure, and $n_{max}$ [1/s] is a maximum number of times of water discharge operation that the drainage device 17 can perform per second.
[Formula 4]

$$A \times \frac{D_{P,max}}{3600} < n_{max} \times \delta \qquad (6)$$

In a case where the detector 21 performs detection processing every $\Delta t$ [s], the water collection container 15 must have a void space (that is, a region filled with air within the water collection container 15) capable of accommodating a maximum volume of water flowing into the water collection container 15 during the period $\Delta t$. Thus, formula (7) must hold. In formula (7), L [mm] is a height of the void area of the water collection container 15.
[Formula 5]

$$A \times \frac{D_{P,max}}{3600} \times \Delta t < B \times L \qquad (7)$$

The following explains calculation of the depth of precipitation and/or precipitation intensity by the precipitation gauge 100, which includes a normally closed solenoid valve and the drainage device 17.

The amount of water $\delta$ [mm$^3$] flowing through the drainage pipe 16 when the normally closed solenoid valve operates for a period T[s] is expressed by formula (8). In formula (8), S [mm$^2$] is a cross-sectional area of the drainage pipe 16, $K_v$ is a flow coefficient, and v(t) [mm/s] is a speed of water flowing out of the drainage pipe 16. t is an elapsed period of time from start of the water discharge operation. When water is regarded as an incompressible fluid with a negligible viscosity, the speed v(t) is expressed by formula (9) (Bernoulli's principle). In formula (9), g is an acceleration due to gravity (approximately 9.8 [m/s$^2$]), H(t) [mm] is the water level (that is, a height from the drainage outlet 15a to the water surface W), and B is sufficiently larger than S. Thus, when a discharge period $T_i$ of the i-th discharge is equal to a discharge period $T_j$ of the j-th discharge (i $\neq$ j), and the water level $H(0)_i$ at the start of the i-th discharge is also equal to the water level $H(0)_j$ at the start of the j-th discharge, a discharge amount $\delta_i$ in the i-th discharge processing is equal to a discharge amount $\delta_j$ in the j-th discharge processing.

[Formula 6]

$$\delta = S \times K_v \times \int_0^T v(t)dt \qquad (8)$$

$$v(t) = \sqrt{\frac{2gH(t) \times 10^3}{1 - \frac{S^2}{B^2}}} \qquad (9)$$

The depth of precipitation D [mm] can be calculated from formula (4) using the discharge amount $\delta$ calculated by formula (8), and the precipitation intensity $D_P$ [mm/h] can be calculated from formula (5) using the discharge amount $\delta$ calculated by formula (8).

According to formula (8), it is necessary to calculate an integral and accurately measure the water level H. Both calculation cost and measurement cost can be reduced by sufficiently suppressing fluctuation in the water level H. Specifically, setting a period T to a small value (for example, less than 1 second) and making the cross-sectional area B of the water collection container 15 sufficiently larger than the cross-sectional area S of the drainage pipe 16 (for example, B > 100 $\times$ S) can suppress the fluctuation in the water level due to inflow and discharge of water. As a result, the discharge amount $\delta$ is expressed by formula (10) (Torricelli's theorem).

[Formula 7]

$$\delta = S \times K_v \times T \times \sqrt{2gH \times 10^3} \qquad (10)$$

For example, when P = 1[h], A= $\pi \times 50$ [mm] $\times 50$ [mm], S = $\pi \times 2$ [mm] $\times 2$ [mm], $K_v$ = 0.14, T = 0.5 [s], and H = 75 [mm], the precipitation intensity $D_{P,max}$ [mm/h] is expressed by formula (11) from formulas (5) and (10). In a case where water level is detected at intervals of 0.5 seconds ($\Delta$t = 0.5), a maximum value of N is 7200. Thus, the maximum precipitation intensity $D_{P,max}$ [mm/h] that the precipitation gauge 100 can measure is 978 [mm/h].

[Formula 8]

$$D_{P,max} = \frac{0.14 \times 2^2 (mm^2) \times \pi \times 0.5(s) \times \sqrt{2 \times 9.8(m/s^2) \times 75(mm) \times 10^3}}{50^2(mm^2) \times \pi \times 1(h)} \times N \qquad (11)$$

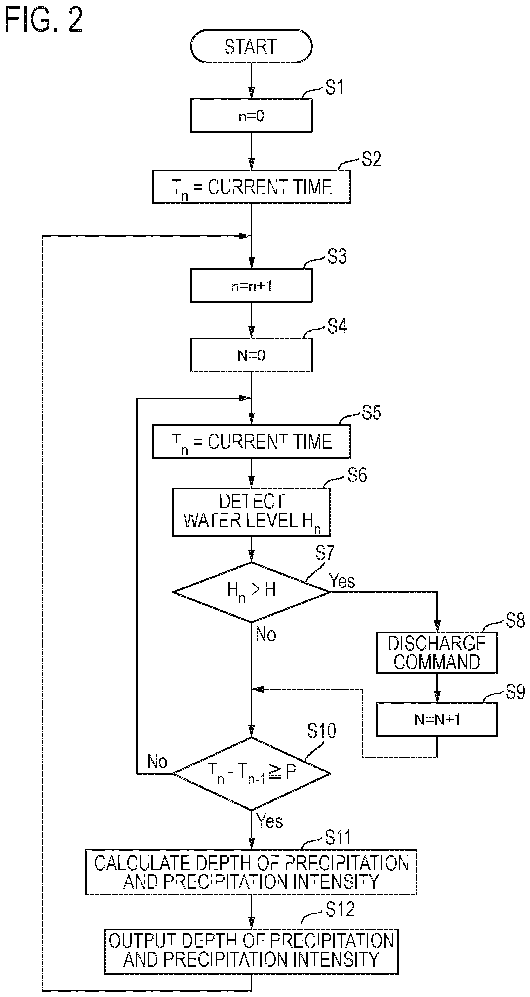

The flowchart indicated in FIG. 2 indicates operation flow of the processing device 20, which measures the depth of precipitation and precipitation intensity at predetermined intervals of P [h]. In FIG. 2, a symbol "=" is an assignment operator, representing assignment of a value on a right side to the symbol on a left side. In FIG. 2, symbols ">" and "$\geq$" are comparison operators, and comparison results of the left and right sides are represented by truth values.

The controller 22 sets 0 at a control variable n as initial setting (step S1) and sets current time at a variable $T_n$ (step S2). The controller 22 increments the control variable n (step S3), sets 0 at a count value N representing the number of times of output of a discharge command (step S4), and sets current time at the variable $T_n$ (step S5).

The water level gauge 18 measures the water level $H_n$ in the water collection container 15 (step S6). The detector 21 detects rise in the water level (step S7). In the above example, the detector 21 detects change in the water level based on change in the capacitance measured by the water level gauge 18. In a case where there is no precipitation, the detector 21 will, of course, not detect rise in the water level.

In a case where rise in the water level is detected in the processing of step S7, the controller 22 outputs a discharge command (specifically, a signal of 1 pulse) to the drainage device 17 (step S8), makes the drainage device 17 to execute discharge, increments the count value N (step S9), and further calculates an elapsed period of time $T_n - T_{n-1}$ (step S10).

In a case where no rise in the water level is detected in the processing of step S7, the controller 22 calculates the elapsed period of time $T_n - T_{n-1}$ (step S10).

After it is determined in the processing of step S10 that the elapsed period of time $T_n - T_{n-1}$ is less than a period P, the processing of step S5 and subsequent steps is executed. When it is determined in the processing of step S10 that the elapsed period of time $T_n - T_{n-1}$ reaches the period P, the calculator 23 calculates the depth of precipitation and the precipitation intensity using the discharge amount $\delta$ [mm$^3$] of the drainage device 17 per discharge command, the count value N representing the number of discharge commands, the area A [mm$^2$] of the opening of the receiver 14, and the period P[h] (step S11), and outputs the calculated depth of precipitation and precipitation intensity (step S12). The depth of precipitation D [mm] is calculated from formula (4), and the precipitation intensity $D_P$ [mm/h] is calculated from formula (5).

After the processing of step S12, the processing of step S3 and subsequent steps is executed, and the depth of precipitation and the precipitation intensity for the next period P are measured.

The flowchart indicated in FIG. 2 may be modified to a flowchart in which the calculator 23 calculates the depth of precipitation D [mm] or precipitation intensity $D_P$ [mm/h].

According to the precipitation gauge of the present disclosure, as described above, even in atmospheric phenomena with precipitation intensity exceeding 100 [mm/h], it is possible to continuously measure a depth of precipitation and/or precipitation intensity.

The water level gauge 18 may be a water level gauge to measure the water level by change in capacitance of a single electrode extending in a measurement direction of the water level. The water level gauge 18 may be a water level gauge to directly measure the water level using ultrasonic or infrared. The water level gauge 18 may be a water level gauge to convert the weight measured using a load cell into the water level.

The drainage device 17 may be provided at the drainage outlet 15a instead of the drainage pipe 16.

The water surface W may be covered with a substance that has a specific gravity lighter than water, such as expanded polystyrene, instead of the non-volatile oil 19.

In a case where the drainage pipe 16 is long, measurement accuracy can be improved by considering a viscosity coefficient of the drainage pipe 16 and/or a slope of the drainage pipe 16.

<Supplementary Note>

The present invention has been described with reference to the example embodiment. It will be understood that a person skilled in the art can make various changes and replace the elements with equivalents without deviating from the scope of the present invention. Further, to adapt a specific system, device or components thereof to teaching of the present invention, many modifications can be made without deviating from the essential scope of the present invention. Thus, the present invention is not limited to the specific embodiment disclosed for implementing the present invention and includes all embodiments included in the accompanying claims.

Furthermore, use of terms such as "first" and "second" in the present specification and/or the accompanying claims does not indicate any order or importance, and such terms are used to distinguish elements. The terms used in the present specification are used to explain the embodiment and are not intended to limit the present invention in any way. The term "include" and its declensions as used in the present specification and/or the accompanying claims, clarify existence of the mentioned features, steps, operation, elements and/or components, but do not exclude existence or addition of one or more other features, steps, operation, elements, components and/or a group thereof. The term "and/or" includes any combination of one or more of the listed elements, if applicable. Unless otherwise specified, in the claims and the specification, "connect", "couple", "join", "link" or synonyms thereof and all declensions do not necessarily deny existence of one or more intermediate elements between two which are, for example, "connected", "coupled" or "linked" to each other. In the claims and the specification, unless otherwise specified, the term "any", when used, should be understood as a term representing the same meaning as a universal quantifier $\forall$. For example, the expression "for any X" has the same meaning as "for all X" or "for each X." An expression like "at least one of A, B, and C" (in English, for example, "at least one of A, B and C," "at least one of A, B or C," or "at least one of A, B and/or C") means that if it exists, unless otherwise specified, it refers to selecting one element from a set P, which is a power set of $2^S$ of a set S excluding an empty set $\varphi$, based on all the listed elements. In this example, $S = \{A, B, C\}$, $2^S = \{\varphi, \{A\}, \{B\}, \{C\}, \{A, B\}, \{A, C\}, \{B, C\}, \{A, B, C\}\}$, and $P = \{\{A\}, \{B\}, \{C\}, \{A, B\}, \{A, C\}, \{B, C\}, \{A, B, C\}\}$, which means that one element (for example, $\{A, C\}$) is selected from the set P.

Unless otherwise noted, all the terms (including technical terms and scientific terms) used in the present specification have the same meaning as generally understood by a person skilled in the art in the field to which the present invention belongs. Further, the terms such as terms defined in dictionaries that are commonly used should be interpreted as having the same meaning as in the context of the related art and the present disclosure, and unless otherwise explicitly defined, should not be interpreted ideally or excessively formally.

It will be understood that many techniques and steps are disclosed in the description of the present invention. These respectively have individual advantages and can be used in combination with one or more or, in some cases, all of other disclosed techniques. Thus, to avoid complication, in the present specification, any possible combinations of the individual techniques and steps are not described. Nevertheless, the specification and the claims should be read and understood that such combinations are completely within the scope of the present invention and the claims.

Structures, materials, actions and equivalents corresponding to all functional elements coupled with means or steps in the following claims are intended to include, if any, structures, materials or actions for performing functions in combination with other elements.

Although an embodiment of the present invention has been described above, the present invention is not limited to the embodiment. Various changes and modifications are allowed in a range not deviating from the gist of the present invention. The selected and described embodiment is provided to explain principles and actual applications of the present invention. The present invention is used as various embodiments along with various changes or modifications, and various changes or modifications are determined depending on the expected applications. All of such changes and modifications are intended to be included in the scope of the present invention defined by the accompanying claims and are intended to be protected in the same manner to the extent that they are fairly, legally and rightly interpreted.

[DESCRIPTION OF REFERENCE NUMERALS]

10 Main Body
11 Base
12 Case
13 Legs
14 Receiver
14a Water Supply Pipe
15 Water collection container
15a Drainage outlet
15b Side wall
16 Drainage Pipe
17 Drainage Device
18 Water level gauge
18a Substrate
18b Reference electrode
18c Water level electrode
19 Non-volatile oil
20 Processing device
21 Detector
22 Controller
23 Calculator
100 Precipitation gauge

**Claims**

1. A precipitation gauge comprising:

   a receiver to receive water as a substance falling from the sky;
   a water collection container into which the water in the receiver flows as water in liquid phase, the water collection container including a drainage outlet and storing water with the water in the water collection container reaching a predetermined water level higher than a position of the drainage outlet;
   a drainage pipe connected to the drainage outlet;
   a drainage device attached to the drainage outlet or the drainage pipe to discharge a certain amount of the water in the water collection container in one operation;
   a water level gauge to measure a water level in the water collection container;
   a detector to detect rise in the water level in the water collection container on a basis of a measurement result by the water level gauge;

a controller to make the drainage device discharge the water in the water collection container to lower the water level in the water collection container to the predetermined water level in response to detection of rise in the water level in the water collection container; and

a calculator to calculate a depth of precipitation and/or precipitation intensity using the number of times of discharge by the drainage device.

2. The precipitation gauge according to claim 1, wherein

the water level gauge includes a reference electrode and a water level electrode arranged in the water collection container, the reference electrode being located in the water in the water collection container, and the water level electrode intersecting with a surface of the water in the water collection container, and

the water level gauge measures the water level by comparing capacitance measured by the reference electrode and capacitance measured by the water level electrode.

3. The precipitation gauge according to claim 2, wherein the detector detects the rise in the water level in the water collection container in a case of capacitance $C_w$ of the water level electrode being not less than a sum of capacitance $C_s$ of the reference electrode and a threshold $\xi$, where the threshold $\xi$ is an incremental value of capacitance corresponding to rise in the water level by inflow of water of the same amount as an amount of water to be discharged by the drainage device in one operation.

4. The precipitation gauge according to any of claims 1 to 3, wherein

[Formula 9]

$$A \times \frac{D_{P,max}}{3600} < n_{max} \times \delta$$

holds where A [mm$^2$] is an area of an opening of the receiver, $D_{p,max}$ [mm/h] is a maximum value of the precipitation intensity that the precipitation gauge can measure, $n_{max}$ [1/s] is a maximum number of times of discharge operation that the drainage device can perform per second, and $\delta$ [mm$^3$] is an amount of water to be discharged by the drainage device in one discharge operation.

5. The precipitation gauge according to any of claims 1 to 4, wherein

the receiver includes a water supply pipe,
the water in the receiver flows into the water collection container through the water supply pipe, and
an outlet of the water supply pipe is located below the predetermined water level.

6. The precipitation gauge according to any of claims 1 to 5, wherein the surface of the water in the water collection container is covered with non-volatile oil.

## FIG. 1

# FIG. 2

```
           ┌─────────────┐
           │    START    │
           └─────────────┘
                  │
                  ▼           S1
           ┌─────────────┐
           │    n=0       │
           └─────────────┘
                  │
                  ▼                S2
     ┌─────────────────────────┐
     │ T_n = CURRENT TIME       │
     └─────────────────────────┘
                  │
                  ▼                S3
           ┌─────────────┐
           │   n=n+1     │
           └─────────────┘
                  │
                  ▼           S4
           ┌─────────────┐
           │    N=0       │
           └─────────────┘
                  │
                  ▼                S5
     ┌─────────────────────────┐
     │ T_n = CURRENT TIME       │
     └─────────────────────────┘
                  │
                  ▼                S6
     ┌─────────────────────────┐
     │        DETECT            │
     │   WATER LEVEL H_n         │
     └─────────────────────────┘
                  │
                  ▼          S7
            ╱───────────╲      Yes
           ⟨   H_n > H   ⟩──────────►  S8
            ╲───────────╱         ┌────────────┐
                  │ No            │ DISCHARGE  │
                  │               │  COMMAND   │
                  │               └────────────┘
                  │                     │ S9
                  │               ┌────────────┐
                  │               │   N=N+1    │
                  │               └────────────┘
                  ▼       S10
         No  ╱───────────────╲
       ◄────⟨ T_n - T_{n-1} ≧ P ⟩
            ╲───────────────╱
                  │ Yes
                  ▼                S11
     ┌───────────────────────────────────┐
     │ CALCULATE DEPTH OF PRECIPITATION   │
     │   AND PRECIPITATION INTENSITY      │
     └───────────────────────────────────┘
                  │                S12
     ┌───────────────────────────────────┐
     │ OUTPUT DEPTH OF PRECIPITATION      │
     │   AND PRECIPITATION INTENSITY      │
     └───────────────────────────────────┘
```

## INTERNATIONAL SEARCH REPORT

| International application No. |
|---|
| **PCT/JP2023/039623** |

**A. CLASSIFICATION OF SUBJECT MATTER**

*G01W 1/14*(2006.01)i
FI: G01W1/14 N

According to International Patent Classification (IPC) or to both national classification and IPC

**B. FIELDS SEARCHED**

Minimum documentation searched (classification system followed by classification symbols)

G01W1/00-1/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2006-214805 A (YOKOGAWA DENSHIKIKI CO., LTD.) 17 August 2006 (2006-08-17) entire text, all drawings | 1-6 |
| A | JP 3-255388 A (MEISEI ELECTRIC CO., LTD.) 14 November 1991 (1991-11-14) entire text, all drawings | 1-6 |
| A | JP 2002-286864 A (TAKUWA CORP.) 03 October 2002 (2002-10-03) entire text, all drawings | 1-6 |
| A | KR 10-2019-0010184 A (SEOUL NATIONAL UNIVERSITY R&DB FOUNDATION) 30 January 2019 (2019-01-30) entire text, all drawings | 1-6 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/039623**

| Patent document cited in search report | | | Publication date (day/month/year) | Patent family member(s) | Publication date (day/month/year) |
|---|---|---|---|---|---|
| JP | 2006-214805 | A | 17 August 2006 | (Family: none) | |
| JP | 3-255388 | A | 14 November 1991 | (Family: none) | |
| JP | 2002-286864 | A | 03 October 2002 | (Family: none) | |
| KR | 10-2019-0010184 | A | 30 January 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002286864 A